**Europäisches Patentamt**

**European Patent Office**

**Office européen des brevets**

(11) Veröffentlichungsnummer: **0 137 476**

**A1**

(12) # EUROPÄISCHE PATENTANMELDUNG

(21) Anmeldenummer: **84111999.3**

(22) Anmeldetag: **06.10.84**

(51) Int. Cl.⁴: **F 03 B 17/06**
**F 03 D 3/06**

(30) Priorität: **13.10.83 DE 3337490**

(43) Veröffentlichungstag der Anmeldung:
**17.04.85 Patentblatt 85/16**

(84) Benannte Vertragsstaaten:
**AT CH FR LI**

(71) Anmelder: **Böttcher, Willi**
**Klintener Weg 3**
**D-2319 Martensrade Schleswig/Holstein(DE)**

(72) Erfinder: **Böttcher, Willi**
**Klintener Weg 3**
**D-2319 Martensrade Schleswig/Holstein(DE)**

(54) **Segelflügelrotor zur Energiegewinnung aus Wind- oder Wasserkraft sowie zum Schiffsantrieb.**

(57) Segelflügelrotor zur Energiegewinnung aus Wind- oder Wasserkraft sowie zum Schiffsantrieb.

Seine Hauptmerkmale sind der frontale Antrieb, die Ausschaltung des Strömungswiderstandes auf der Rücklaufseite der Rotation und das selbstständige Einstellen der Flügel auf die Strömungsrichtung ohne besondere Steuerung. Der verhältnismäßig einfache Aufbau durch seine senkrechte Achse und der Wegfall des Umlenkgetriebes sind große Vorteile. Die Flügelgröße und die Holmlänge müssen natürlich in einem vernünftigen Verhältnis zu einander und auch zum Kraftbedarf stehen. Kunststoffe und Leichtmetalle dürften bei der Flügelherstellung ganz besonders Ausgangsbasis bilden. Die Flügel sollen möglichst leicht und trotzdem stabil sein.

EP 0 137 476 A1

./...

Figur 1

zeigt den Segelflügelrotor in Seitenansicht.Die Kreuzungsholme mit ihren Flügeln sind übersichtshalber weggelassen.
Die Strömung soll aus der Sicht des Betrachters kommen.

Figur 2

zeigt den Segelflügelrotor aus der Sicht von oben.

Achse mit Holmen und der
Holmstabilisierungsteil.

Flügelgelenke
bis 90 Grad
schwenkbar

Antriebsseite.
Flügel in holmanliegender
und frontaler Stellung
zur Strömungskraft.

Rücklaufsseite.
Flügel in Segelstellung.
Kein Strömungswiderstand.

Rollenlager

Antriebsseite

Rücklaufseite

Flügel in holmanliegender und frontaler
Stellung zur Aufnahme
der Strömungskraft

Flugel in Segelstellung.
Kein Strömungswiderstand.

Holmstabilisierungsteil

Laufrichtung

Anlegepuffer

Strömungsrichtung

Beschreibung gemäß § 5 der Patentanmeldeverordnung.

Segelflügelrotor zur Energiegewinnung aus Wind- oder Wasserkraft sowie zum Schiffsantrieb.

Die Erfindung betrifft einen Rotor,der nicht nur zur Energieerzeugung sondern auch durch seinen horizontalen Lauf sehr gut als Schiffsantrieb geeignet ist.

Es ist bekannt,daß in der Vergangenheit in China schon Versuche zum Schiffsantrieb mit ähnlicher Konstruktion durchgeführt wurden,die aber alle nicht den gewünschten Erfolg bringen konnten.Diese Idee war durch die Anwendung einfacher und starrer Flügelsysteme mit zu hohem Rücklaufwiderstand bis heute nicht zu verwirklichen.

Der Erfindung liegt die Aufgabe zu Grunde die Naturkräfte nun durch möglichst frontalen Antrieb intensiver, einfacher und in größerem Umfang als bisher für Jedermann nutzbar und atracktiver zu machen.

Die Aufgabe wird erfindungsgemäß dadurch gelöst,daß der Segelflügelrotor bei horizontalem Lauf mit frontaler Flügelstellung auf der Antriebsseite und mit in Segelstellung befindlichen Flügeln auf der Rücklaufseite der Rotation arbeitet.

Vorteile der Erfindung: Größere Kraftgewinnung im Vergleich zu Turbinen. Verhältnismäßig einfache Bauweise.Der Segelflügelrotor muß nicht unbedingt in großer Höhe aufgebaut werden,wie es zum Beispiel beim neuen Windkraftwerk Grovian geschehen ist. Er arbeitet auch gut in Bodennähe und außerdem in jeder Fluß-,Meeres- oder Gezeitenströmung. Besonders vorteilhaft ist sein Einsatz in Flußströmungen weil hierbei ein kostspieliger Stausee nicht erforderlich ist.

Die Antriebskraft gelangt durch seine senkrechte Achse ohne Umlenkgetriebe auf einfache stabile Weise bei Windantrieb gleich zum Generator am Erdboden und bei und beim Wasserantrieb gleich nach oben zum Stromerzeuger. Der Wartungsaufwand ist dadurch gering und auch billiger.

Ein Ausführungsbeispiel der Erfindung ist in der Zeichnung dargestellt und wird im folgenden näher beschrieben.

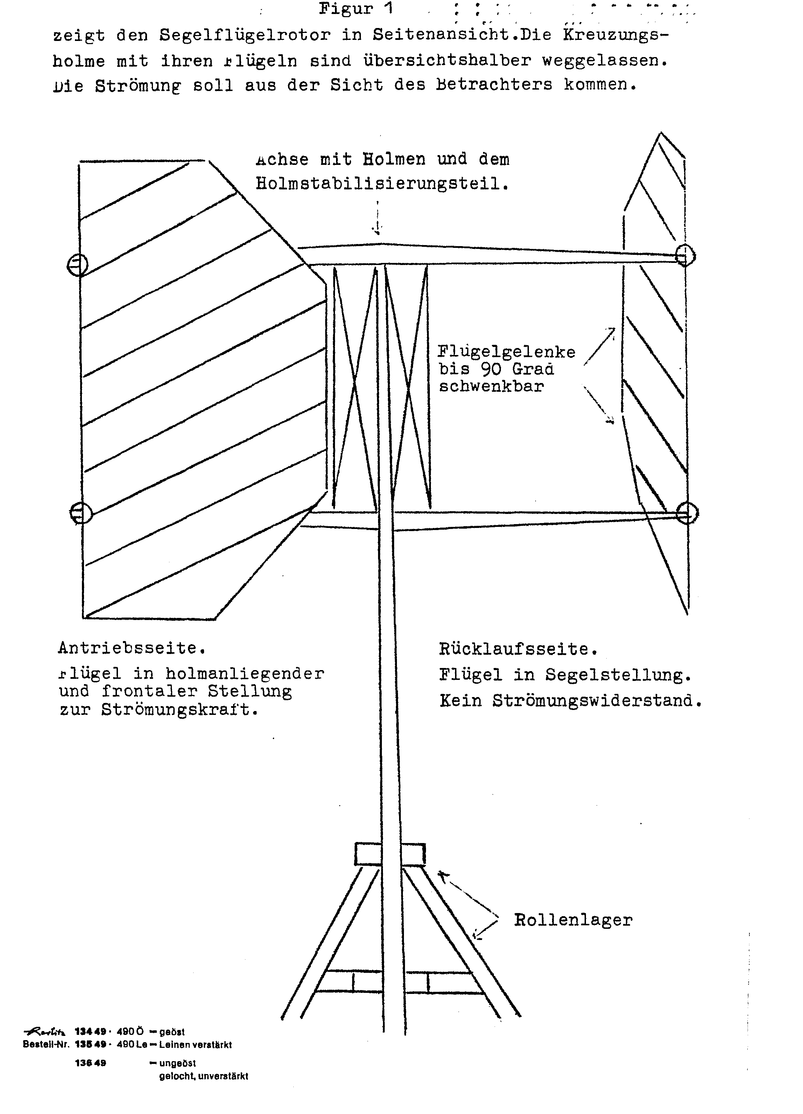

Es zeigt die Figur 1 den Segelflügelrotor mit seiner senkrechten Achse, den Holmen mit dem Holmstabilisierungsteil in der Mitte und seiner typischen Flügelstellung in Seitenansicht. Die Kreuzungsholme mit ihren Flügeln wurden übersichtshalber weggelassen.

Auf der Antriebsseite befindet sich der Flügel bereits in holmanliegender Stellung. Hier wird er von der Strömungskraft frontal erfaßt und zur Drehung nach rechts gezwungen. Durch die Drehung wird nun aber auch der nachfolgende Flügel ebenfalls frontal getroffen und er selbst gelangt dadurch in die Rücklaufseite der Rotierung. Durch seine Flügelgelenke kann er hier der Strömung ausweichen und in die widerstandslose Segelstellung übergehen, die er bis zum Eintritt in die Antriebsseite beibehält. Hier aber zwingt ihn die Strömung wieder zu holmanliegender und frontaler Stellung. Das Spiel beginnt von Neuem.

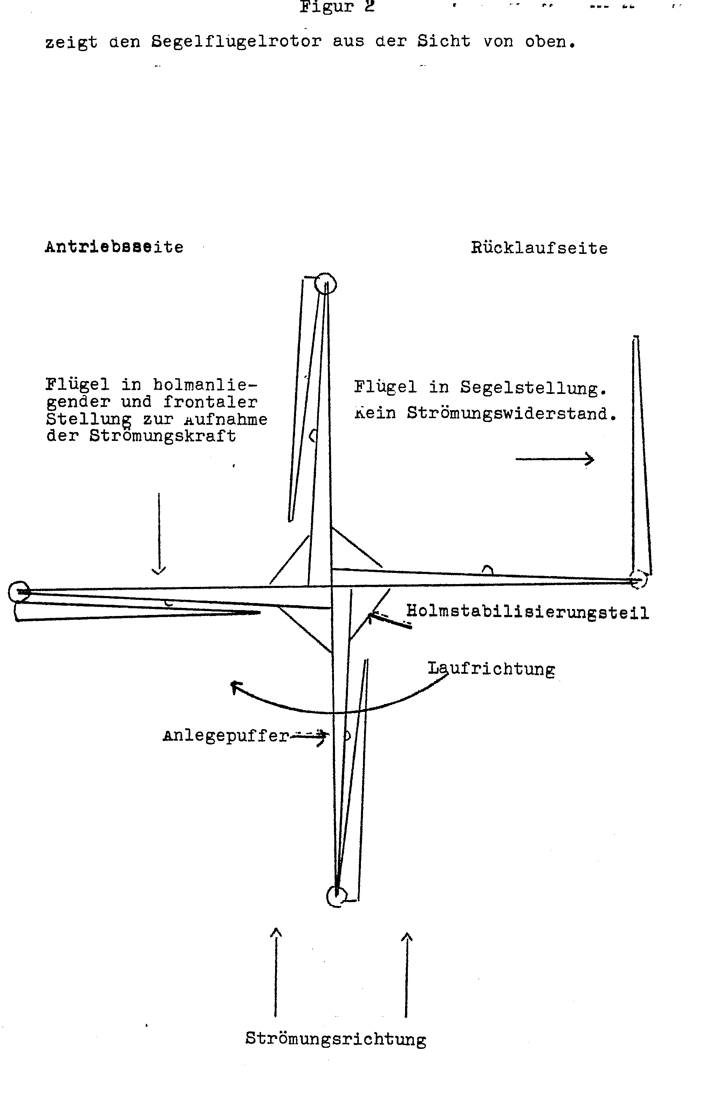

Die Figur 2 zeigt den vollständigen Segelflügelrotor von oben gesehen.

0137476

Patentanspruch gemäß § 35 des Patentgesetzes

1. Segelflügelrotor zur Energiegewinnung aus Wind- oder Wasserkraft sowie zum Schiffsantrieb,

   dadurch gekennzeichnet,daß durch die frontale Flügelstellung auf der Antriebsseite der Strömungsdruck größer ist als bei bisherigen Turbinen mit schräger Flügelstellung.

2. Segelflügelrotor nach Anspruch 1
   dadurch gekennzeichnet,daß auf der Rücklaufseite der Rotation die Flügel in der Lage sind.durch die Einnahme der Segelstellung.den Rücklaufwiderstand auszuschalten.

3. Segelflügelrotor nach Anspruch 1 dadurch gekennzeichnet,daß sich die Flügel selbst auf die Strömungsrichtung ohne besondere Steuerung einstellen und eine maximale Nutzbarmachung der Strömung erreichen.

0137476

## Figur 1

zeigt den Segelflügelrotor in Seitenansicht.Die Kreuzungsholme mit ihren Flügeln sind übersichtshalber weggelassen.
Die Strömung soll aus der Sicht des Betrachters kommen.

Achse mit Holmen und dem
Holmstabilisierungsteil.

Flügelgelenke
bis 90 Grad
schwenkbar

Antriebsseite.

Flügel in holmanliegender
und frontaler Stellung
zur Strömungskraft.

Rücklaufsseite.

Flügel in Segelstellung.

Kein Strömungswiderstand.

Rollenlager

Berlin 13449 · 490 Ö — geöst
Bestell-Nr. 13549 · 490 Le — Leinen verstärkt
13649        — ungeöst
gelocht, unverstärkt

2/2

0137476

## Figur 2

zeigt den Segelflügelrotor aus der Sicht von oben.

**Antriebsseite**                              Rücklaufseite

Flügel in holmanlie-          Flügel in Segelstellung.
gender und frontaler          Kein Strömungswiderstand.
Stellung zur Aufnahme
der Strömungskraft

Holmstabilisierungsteil

Laufrichtung

Anlegepuffer

Strömungsrichtung

# Europäisches Patentamt

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-C- 834 077 (WILBERT)<br>* Anspruch 1 *<br><br>--- | 1-3 | F 03 B 17/06<br>F 03 D 3/06 |
| X | FR-A-2 300 910 (ALARY)<br>* Anspruch *<br><br>--- | 1-3 | |
| X | US-A-1 819 749 (JENKINS)<br>* Anspruch *<br><br>--- | 1-3 | |
| X | PATENTS ABSTRACTS OF JAPAN, Band 7, Nr. 59 (M-199)[1204], 11. März 1983; & JP - A - 57 203 874 (JIYUUZOU BITOU) 14.12.1982<br>* Zusammenfassung *<br><br>----- | 1-3 | |

**RECHERCHIERTE SACHGEBIETE (Int. Cl.4)**

F 03 B
F 03 D

Der vorliegende Recherchenbericht wurde für alle Patentansprüche erstellt.

| Recherchenort<br>DEN HAAG | Abschlußdatum der Recherche<br>16-01-1985 | Prüfer<br>DE WINTER P.E.F. |
|---|---|---|